# EUROPEAN PATENT APPLICATION

(11) **EP 2 124 036 A1**
(43) Date of publication of application: **25.11.2009**
(21) Application number: 08104023.0
(22) Date of filing: 20.05.2008
(51) Int. Cl.: G01N 21/13

(54) **Pre-positioning and guiding mechanism for inserting a flow cell in a detector**

(71) Applicant: Agilent Technologies, Inc., Santa Clara CA 95051 (US)
(72) Inventor: Kheim, Tobias, 76337, Waldbronn (DE)
(74) Representative: Barth, Daniel Mathias

(57) **Abstract**

A detector device (100) for detecting a fluidic sample conducted through a flow cell cartridge (102) having an electromagnetic source interface (104) and an electromagnetic detector interface (106), the detector device (100) comprising a receptacle (400) adapted for receiving the flow cell cartridge (102), and a guiding mechanism adapted for guiding the flow cell cartridge (102) received in the receptacle (400) into an alignment position in which the electromagnetic source interface (104) is aligned with an electromagnetic radiation source (112) and the electromagnetic detector interface (106) is aligned with an electromagnetic radiation detector (114).

## Description

### BACKGROUND ART

The present invention relates to a detector device.

In liquid chromatography, a fluidic analyte may be pumped through conduits and a column comprising a material which is capable of separating different components of the fluidic analyte. Such a material, so-called beads which may comprise silica gel, may be filled into a column tube which may be connected to other elements (like a control unit, containers including sample and/or buffers) by conduits.

When a fluidic sample is pumped through the column tube, it is separated into different fractions. The separated fluid may be pumped in a flow cell in which the different components are identified on the basis of an optical detection mechanism.

US 5,153,679 discloses an apparatus for measuring light absorbance in a liquid sample which includes a light source for directing light into a sample cell, a cylindrical sample cell, a light detector for measuring intensity of light emitted from the cell and focusing means for forming a tapered light beam to pass through the sample cell. The tapered light beam can be either a diverging beam or a converging beam through the cell. When the light beam is a diverging beam, a masking means is positioned downstream of the cell to assure that any light striking the cell wall is not directed to the light detector.

US 4,536,091 discloses that, to reduce noise in an absorbance monitor in which the light source is a feedback controlled deuterium lamp, a mirror focuses light from a part of the central bright spot in the deuterium lamp through a small aperture in an aperture plate which blocks all other light passing through the optical detecting and electrical sensor station. The light passing through the aperture is split into two unpolarized beams within the optical detecting and electrical sensor station, one of which is transmitted through an aperture optically at least as large as the image of the aperture near the lamp and into a flow cell to sense the absorbance or transmittance of an effluent. After the sensing beam has passed through the effluent, it is electrically compared with the other beam which has been passed through an aperture to cancel out the common-mode noise and in some applications the absorbance or transmittance which may be due to the solvent or other carrier of the sample.

US 4,823,168 discloses a flow cell for a photometer, which comprises a cell body integrated from a pair of cell body members by joining, at least one of which is provided with a linear groove on the joining surface of the cell body member from one end to another to the full length, as exposed to the joining surface, the groove playing both roles of a liquid sample passage and a detecting light path by the integration of the cell body members, and is further provided with a liquid sample inlet passage at an alignment position near one end of the groove and a liquid sample outlet passage at an alignment position near the other end of the groove, both passages being communicated with the grooves, the linear groove being provided with a light reflecting layer to the full length of the linear groove, and a pair of light transmission window members joined with the flow cell body at both ends on the groove-open sides thereof is provided, where polishing of the grooves is readily carried out and random reflection of light or absorption of light due to poor reflection is reduced, and the turbulent flow of a liquid sample and generation of noise are suppressed.

WO 2007/009492 by the same applicant Agilent Technologies discloses a method of coupling at least two conduits for bringing them in communication. Each of the conduits is adapted for conducting a medium and has an outlet and an outer surface adjacent to the outlet. The outer surfaces and a solid plastic material are at least partly inserted into an aperture of a coupling element. The plastic material is plastified and/or melted at least partly. The plastic material is solidified for sealing and fixing the conduits within the aperture of the coupling element.

Conventional detector devices involving a flow cell may be difficult to handle for a user.

### DISCLOSURE

It is an object of the invention to provide a user-convenient detector device. The object is solved by the independent claims. Further embodiments are shown by the dependent claims.

According to an exemplary embodiment of the present invention, a detector device (for instance an electromagnetic radiation detection based detector device) for detecting a fluidic sample conducted through a flow cell cartridge having an electromagnetic source interface (which may be brought in alignment with an electromagnetic radiation source) and an electromagnetic detector interface (which may be brought in alignment with an electromagnetic radiation sensor) is provided, the detector device comprising a receptacle (such as a specifically shaped and/or dimensioned element for precisely accommodating an accordingly shaped flow cell cartridge) adapted for receiving the flow cell cartridge, and a (for instance mechanical) guiding mechanism adapted for (for instance mechanically) guiding the flow cell cartridge received in the receptacle into an alignment position in which the electromagnetic source interface is aligned with (for instance is located opposing or adjacent to) an electromagnetic radiation source and the electromagnetic detector interface is aligned with (for instance is located opposing or adjacent to) an electromagnetic radiation detector.

According to another exemplary embodiment, a measurement device (such as a liquid chromatography device) for measuring a fluidic sample is provided, the measurement device comprising a flow cell cartridge for receiving the fluidic sample, and a detector device having the above mentioned features in which the flow cell cartridge is inserted for detecting the fluidic sample conducted through the flow cell cartridge.

According to still another exemplary embodiment, a method of detecting a fluidic sample conducted through a flow cell cartridge having an electromagnetic source interface and an electromagnetic detector interface is provided, the method comprising receiving the flow cell cartridge in a receptacle of a detector device, and guiding, by a guiding mechanism of the detector device, the flow cell cartridge received in the receptacle into an alignment position in which the electromagnetic source interface is aligned with an electromagnetic radiation source and the electromagnetic detector interface is aligned with an electromagnetic radiation detector.

According to an exemplary embodiment, a flow cell cartridge may be positioned in proper alignment so that an electromagnetic source interface of the flow cell cartridge is couplable to an electromagnetic radiation source and an electromagnetic detector interface of the flow cell cartridge is couplable to electromagnetic radiation detector. Such a precise positioning may be achieved by a user simply actuating a guiding mechanism so that the spatial accuracy of the positioning of the flow cell cartridge within the detector device and the ease of handling may be significantly improved. After having inserted the flow cell cartridge manually into a receptacle which is simple even for a non-skilled user without the danger of misalignment, a predefined alignment position of the flow cell cartridge within the detector device may be guaranteed by simply operating the guiding mechanism which automatically brings the flow cell cartridge to the correct position. Thus, a modular system operable with flow cell cartridges of different sizes and flow volumes may be provided which at the same time allows for a precise spatial adjustment and an easy operability.

In the following, further exemplary embodiments of the detector device will be explained. However, these embodiments also apply to the measurement device and to the method.

The receptacle may comprise a shape coding feature adapted for receiving a correspondingly (or complementary) shaped flow cell cartridge, the receptacle being shaped (for instance asymmetrically) to allow to receive the flow cell cartridge only in a corresponding orientation. Thus, a shape, size and dimension of the receptacle may be specifically adapted so that a corresponding one of a set of flow cell cartridges may be inserted without the danger of misalignment. Not only insertion of a wrong flow cell cartridge may be securely prevented by taking these measures, but also the insertion of a correct flow cell cartridge in an incorrect orientation with respect to the receptacle. For example, recesses in the receptacle may be shaped in accordance with protrusions of the flow cell cartridge and/or protrusions in the receptacle may be shaped in accordance with recesses of the flow cell cartridge.

The receptacle may be operable so that a user is enabled to manually insert the flow cell cartridge into the receptacle by operating the flow cell cartridge by hand. In other words, the receptacle may be brought to such a position that an insertion opening of the receptacle is exposed for exterior access by a user.

According to an exemplary embodiment, the guiding mechanism is a drawer mechanism. Such a drawer mechanism allows, upon pushing activation by a user, moving the receptacle with the flow cell cartridge received therein into the alignment position by a motion which is restricted due to the construction of the guiding mechanism so that correct alignment between the flow cell cartridge and the detector device can be ensured. A drawer may be denoted as a sliding system in a device. More particularly, the guiding mechanism may be a push loading drawer mechanism being operable so that a user is enabled to bring the flow cell cartridge received in the receptacle into the alignment position by pushing the push loading drawer mechanism along a predefined trajectory, particularly along a predefined linear or straight trajectory defined by at least one guiding rod (for instance by two guiding rods arranged parallel to one another). Thus, when a user exerts a force on the guiding mechanism, this may unambiguously result in a correct alignment between flow cell cartridge and optical path.

As an alternative to a drawer mechanism, the guiding mechanism may be a pivoting mechanism being operable so that a user is enabled to bring the flow cell cartridge received in the receptacle into the alignment position by pivoting the pivoting mechanism about a predefined axis. Thus, in a similar manner as with an audio cassette player, the cartridge may be inserted into the receptacle and may be rotated into the optical path. Also this configuration allows for a convenient insertion of the flow cell cartridge into the system and a correct alignment by a simple pivoting mechanism which is precisely guidable and therefore not prone to failure.

The detector device may comprise the flow cell cartridge adapted to be receivable by the receptacle, particularly may comprise a set of a plurality of different flow cell cartridges having different fluidic dimensions and each being adapted to be receivable by the receptacle. Depending on an analysis to be performed and/or depending on an amount of sample which is available, different fluidic volumes within the flow cell cartridge may be desired. It may also be desired to have available different lengths of optical paths through which a fluid passes and through which an electromagnetic radiation beam (for instance a light beam) propagates. According to an exemplary embodiment, one and the same receptacle may be operable with a number of different modularly arranged flow cell cartridges. Thus, a set of different volumes and path lengths may be offered to a user to flexibly meet requirements of a specific experiment or analysis.

The flow cell cartridge may comprise a fluidic sample inlet interface (such as a fluid connector) adapted for receiving the fluidic sample (for instance via an inlet tube), may comprise a fluidic conduit adapted for conducting the fluidic sample from the fluidic sample inlet interface along a path between the electromagnetic source interface and the electromagnetic detector interface, and may comprise a fluidic sample outlet interface (such as a further fluid connector) adapted for receiving the fluidic sample from the fluidic conduit and for draining the fluidic sample out of the flow cell cartridge (for instance via an outlet tube). Thus, the detector device may be implemented within a fluidic measurement device such as a liquid chromatography device, more particularly a HPLC (high-performance liquid chromatography). A fluid may be pumped through the flow cell cartridge and may, during this pumping procedure, be analyzed using an electromagnetic detection beam as a detection probe.

The flow cell cartridge may comprise a first optical fiber at the electromagnetic source interface and may comprise a second optical fiber at the electromagnetic detector interface. These two fiber pieces may be inserted, integrated or incorporated within the flow cell cartridge so that a free jet coupling with an electromagnetic radiation source and an electromagnetic radiation detector may be made possible. By taking this measure, it may be dispensable to couple electromagnetic radiation such as light into the fluidic portion of the flow cell cartridge. No fiber coupling is necessary in such a scenario which simplifies the optical arrangement.

The flow cell cartridge may comprise a first ferrule (or sleeve) in which the first optical fiber is embedded and may comprise a second ferrule (or sleeve) in which the second optical fiber is embedded. Thus, the sensitive optical fibers may each be embedded in a corresponding mechanically stable sleeve which on the one hand stabilizes the fibers and on the other hand allows for the provision of external protrusions or knobs which can be brought in engagement with corresponding alignment recesses of the detector device. Thus, also the optical coupling interfaces may synergetically provide their contribution to a correct alignment.

The detector device may comprise a first groove, particularly a first basically V-shaped groove, adapted for engaging the first ferrule and may comprise a second groove, particularly a second basically V-shaped groove, adapted for engaging the second ferrule when the flow cell cartridge is in the alignment position. These grooves may contribute to a correct spatial alignment of the flow cell cartridge with regard to source and detector units.

Particularly, the detector device may comprise a damping mechanism, particularly a rubber buffer and/or a metal spring, adapted for mechanically damping a force resulting from an abutment of the first groove against the first ferrule and of the second groove against the second ferrule when the flow cell cartridge is brought (for instance slid) in the alignment position. When operating the guide mechanism, the flow cell cartridge may be accelerated and may, at the end of its motion, abut or hit against the corresponding grooves of the detector device. In order to prevent mechanical damage or misalignment of the sensitive optical system, such a damping mechanism may be provided.

The flow cell cartridge may comprise a pair of curved (particularly angled) grooves, particularly a pair of step-shaped grooves, arranged at opposing surface portions of the flow cell cartridge. Moreover, the detector device may comprise a pair of locking elements, particularly a pair of fork spring elements, arranged for engaging the pair of curved grooves when the flow cell cartridge is in the alignment position. In a curved configuration, the locking elements may first be guided along a first section of the grooves and may then be locked in a second angled section of the grooves. The corresponding provision of spring elements and curved grooves may allow for a correct alignment of the flow cell cartridge in the optical path and at the same time may fasten the flow cell cartridge due to the curved geometry of the grooves. By providing the pair of curved grooves and the pair of spring elements to be arranged at opposing main surfaces of the flow cell cartridge, a two-sided stabilization may be guaranteed. In an alternative embodiment, only one groove and one locking element may be provided.

The detector device may further comprise a fixing (or fastening) mechanism being actuable for fixing the flow cell cartridge in the alignment position, particularly a lever mechanism actuable for fixing the flow cell cartridge in the alignment position by tightening a fixing spring. After having inserted the flow cell cartridge into the reception and having shifted it towards the alignment position by operating a drawer mechanism or another kind of guiding mechanism, the flow cell cartridge may be interlocked or latched at the destination by pivoting a lever by a user. This may fix the system at the correct position and may allow for a spatially accurate arrangement.

The detector device may comprise the electromagnetic radiation source and/or the electromagnetic radiation detector. The term electromagnetic radiation source may particularly denote any source of electromagnetic radiation in any appropriate wavelength range (monochromatic or polychromatic), for instance in an infrared range, an optical range, an UV range, etc. The electromagnetic radiation detector may be a detector which is capable of detecting intensity and/or wavelength of the electromagnetic radiation having propagated through the fluidic path. It is possible to measure in transmission (i.e. to perform an absorption measurement or a fluorescence measurement). It is also possible to measure in reflection geometry (i.e. to perform a reflection measurement or a fluorescence measurement). The electromagnetic radiation detector may also comprise optical elements for manipulating a beam, for instance for splitting up the beam to different wavelengths. An optical path within the electromagnetic radiation source and/or the electromagnetic radiation detector may include optical fibers, mirrors such as ellipsoid mirrors, etc. A polychromatic deuterium lamp may be used as an electromagnetic radiation source. As a detector, a photodiode or an array of photodiodes may be used. Also a grating, an aperture, or the like may be used.

The flow cell cartridge may be arranged between the electromagnetic radiation source and the electromagnetic radiation detector in the alignment position to direct a primary electromagnetic radiation beam generated by the electromagnetic radiation source towards the fluidic sample conducted through the flow cell cartridge and to direct a secondary electromagnetic radiation beam from the fluidic sample towards the electromagnetic radiation detector. According to one embodiment, the first electromagnetic radiation beam and the second electromagnetic radiation beam may be same but may differ in intensity, when an absorption measurement is performed. When a fluorescence measurement is performed, wavelength and intensity of the first and the secondary electromagnetic radiation beam may differ.

The electromagnetic radiation source and the electromagnetic radiation detector may be both adapted for a transmission detection (i.e. for being placed sandwiched by the fluidic sample), an optical detection (i.e. a detection using electromagnetic radiation in the range from 400 nm to 800 nm), an absorption detection (i.e. for detecting a damping of photons provided at one end of the fluidic sample by the electromagnetic radiation source and measured after transmission through the fluidic sample by the electromagnetic radiation detector), and a fluorescence detection (i.e. the measurement of fluorescence radiation generated by a sample as a result of an interaction with a primary electromagnetic radiation beam provided by the electromagnetic radiation source, wherein the electromagnetic fluorescence radiation may then be detected by the radiation detector).

The detector device may be adapted for a free jet configuration. A free jet configuration may allow for a lightweight optical path which minimizes damping losses.

The detector device may be adapted as a detector module. A detector module may be a component combinable with different kinds of further life science apparatuses or modules and may therefore be flexibly adjustable to different applications.

The receptacle may be adapted for receiving the flow cell cartridge at a defined reception position. Thus, not only the alignment position of the flow cell cartridge when being inserted by the guiding mechanism into the detector may be precisely defined, but also a position directly after reception of the flow cell cartridge in the receptacle may be accurately defined.

The guiding mechanism may be adapted for guiding the flow cell cartridge into the alignment position triggered by a manual actuation of the guiding mechanism (such as a drawer mechanism) by a user, i.e. using muscle force. Alternatively, the guiding mechanism may be adapted for guiding the flow cell cartridge into the alignment position triggered by an automatic actuation of the guiding mechanism such as by an electric actuation, a pneumatic actuation or a hydraulic actuation.

In the following, further exemplary embodiments of the measurement device will be explained. However, these embodiments also apply to the detector device and the method.

The measurement device may comprise a processing element filled with a separating material. Such a separating material which may also be denoted as a stationary phase may be any material which allows an adjustable degree of interaction with a sample so as to be capable of separating different components of such a sample. The processing element may be arranged in a fluidic path upstream the detector so that fractions of a sample separated by the processing element may be subsequently detected by the detector device.

The separating material may be a liquid chromatography column filling material or packing material comprising at least one of the group consisting of polystyrene, zeolite, polyvinylalcohol, polytetrafluorethylene, glass, polymeric powder, silicon dioxide, and silica gel, or any of above with chemically modified (coated, capped etc) surface. However, any packing material can be used which has material properties allowing an analyte passing through this material to be separated into different components, for instance due to different kinds of interactions or affinities between the packing material and fractions of the analyte.

At least a part of the processing element may be filled with a fluid separating material, wherein the fluid separating material may comprise beads having a size in the range of essentially 1 µm to essentially 50 µm. Thus, these beads may be small particles which may be filled inside the separation section of the microfluidic device. The beads may have pores having a size in the range of essentially 0.01 µm to essentially 0.2 µm. The fluidic sample may be passed through the pores, wherein an interaction may occur between the fluidic sample and the pores.

The fluidic device may be adapted as a fluid separation system for separating components of the sample. When a mobile phase including a fluidic sample passes through the fluidic device, for instance with a high pressure, the interaction between a filling of the column and the fluidic sample may allow for separating different components of the sample, as performed in a liquid chromatography device.

However, the fluidic device may also be adapted as a fluid purification system for purifying the fluidic sample. By spatially separating different fractions of the fluidic sample, a multi-component sample may be purified, for instance a protein solution. When a protein solution has been prepared in a biochemical lab, it may still comprise a plurality of components. If, for instance, only a single protein of this multi-component liquid is of interest, the sample may be forced to pass the columns. Due to the different interaction of the different protein fractions with the filling of the column (for instance using a liquid chromatography device), the different samples may be distinguished, and one sample or band of material may be selectively isolated as a purified sample.

The fluidic device may be adapted to analyze at least one physical, chemical and/or biological parameter of at least one component of the mobile phase. The term "physical parameter" may particularly denote a size or a temperature of the fluid. The term "chemical parameter" may particularly denote a concentration of a fraction of the analyte, an affinity parameter, or the like. The term "biological parameter" may particularly denote a concentration of a protein, a gene or the like in a biochemical solution, a biological activity of a component, etc.

The fluidic device may be implemented in different technical environments, like a sensor device, a test device, a device for chemical, biological and/or pharmaceutical analysis, a capillary electrophoresis device, a liquid chromatography device, a gas chromatography device, an electronic measurement device, or a mass spectroscopy device. Particularly, the fluidic device may be a High Performance Liquid device (HPLC) device by which different fractions of an analyte may be separated, examined and analyzed.

The processing element may be a chromatographic column for separating components of the fluidic sample. Therefore, exemplary embodiments may be particularly implemented in the context of a liquid chromatography apparatus.

The fluidic device may be adapted to conduct the mobile phase through the system with a high pressure, particularly of at least 600 bar, more particularly of at least 1200 bar.

The fluidic device may be adapted as a microfluidic device. The term "microfluidic device" may particularly denote a fluidic device as described herein which allows to convey fluid through microchannels having a dimension in the order of magnitude of less than 500 µm, particularly less than 200 µm, more particularly less than 100 µm or less than 50 µm or less.

Embodiments of the invention may be implemented within an HPLC system (high performance liquid chromatography device). Such a system may comprise a pump, an injector, a column and a detector. The detector within such a HPLC device may be realized by a detector device according to an exemplary embodiment. As a detector principle, an optical transmission detection of a fractionized sample which is pumped through the flow cell may be performed. In new technology generations, the sample volume may be further reduced, at the same time the detection requires a certain length along which an optical measurement shall be performed.

According to an exemplary embodiment, the coupling of the light into the fluidic path may be performed by an optical fibre (which may have a diameter of 200 µm). This requires a precise positioning when coupling the electromagnetic radiation into the flow cell cartridge through which a low volume fluidic sample is conducted. By simply inserting the flow cell cartridge into a reception and by closing the system using a drawer mechanism, precise alignment may be achieved.

A sequence of procedures may be performed for precisely and securely positioning the flow cell cartridge in an electromagnetic detection path.

In a first procedure, the flow cell cartridge may be inserted in a drawer to provide for a protection of a misalignment due to undesired pivoting.

In a second procedure, a locking element such as a fork spring may engage into correspondingly shaped recesses of the flow cell cartridge, or vice versa, for a fine positioning or centralizing.

In a third procedure, a lever may be moved or pulled so that the system is brought into a mechanically stable fixing state. Grooves within the reception chamber may be in engagement with correspondingly shaped optical interfaces of the flow cell cartridge to ensure proper alignment.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 illustrates a detector device according to an exemplary embodiment in which a flow cell cartridge is received in a receptacle but is not yet brought in alignment with an optical detection path.

Fig. 2 shows the detector device of Fig. 1 in which the flow cell cartridge is partially inserted into the detector device.

Fig. 3 shows the detector device of Fig. 1 in which the flow cell cartridge is brought in alignment with an optical detection path of the detector device.

Fig. 4 shows a three-dimensional illustration of a part of the detector device of Fig. 1 illustrating a receptacle thereof and the flow cell cartridge before insertion into the receptacle.

Fig. 5 shows a three-dimensional illustration of a similar scenario as Fig. 4 but with the flow cell cartridge being inserted into the receptacle.

Fig. 6 shows a plan view and a side view of the three-dimensional illustration of Fig. 5.

Fig. 7 shows a similar scenario as Fig. 4 but with the flow cell cartridge being inserted into the receptacle and being slid partially towards an optical detection path.

Fig. 8 shows a plan view and a side view of the three-dimensional illustration of Fig. 7.

Fig. 9 shows a similar scenario as Fig. 4 but with the flow cell cartridge being inserted into the receptacle and being slid entirely into an optical detection path.

Fig. 10 shows a plan view and a side view of the three-dimensional illustration of Fig. 9.

Fig. 11 schematically shows a liquid chromatography apparatus having a detector module according to an exemplary embodiment in a first loading state.

Fig. 12 schematically shows the liquid chromatography apparatus of Fig. 11 in a second loading state.

The illustration in the drawing is schematically.

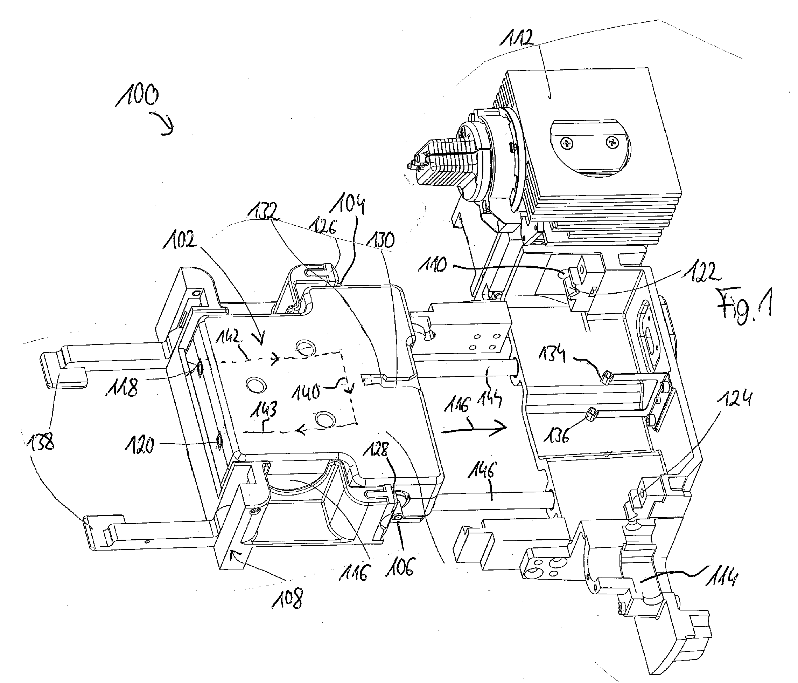

In the following, referring to **Fig. 1**, a detector device 100 for detecting a fluidic sample conducted through a flow cell cartridge 102 having a light source interface 104 and a light detector interface 106 according to an exemplary embodiment will be explained.

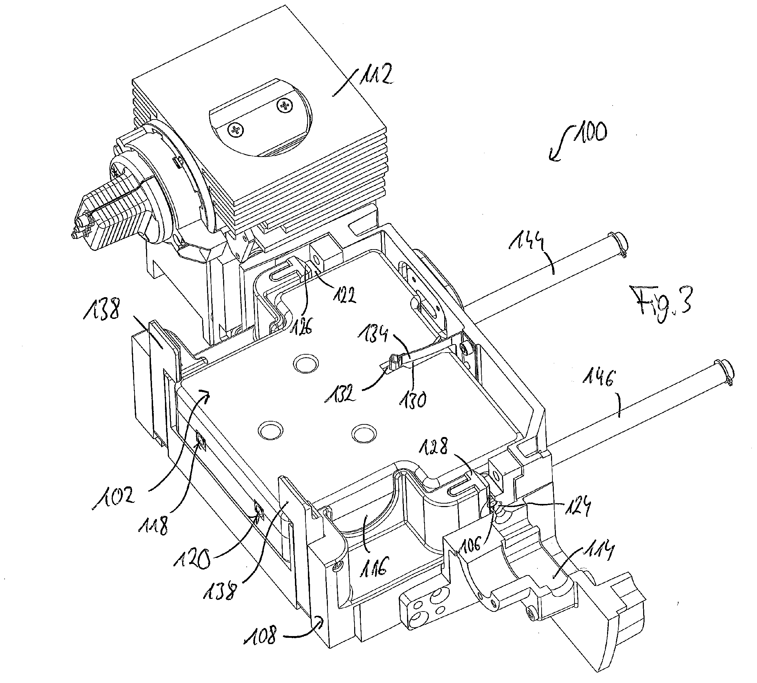

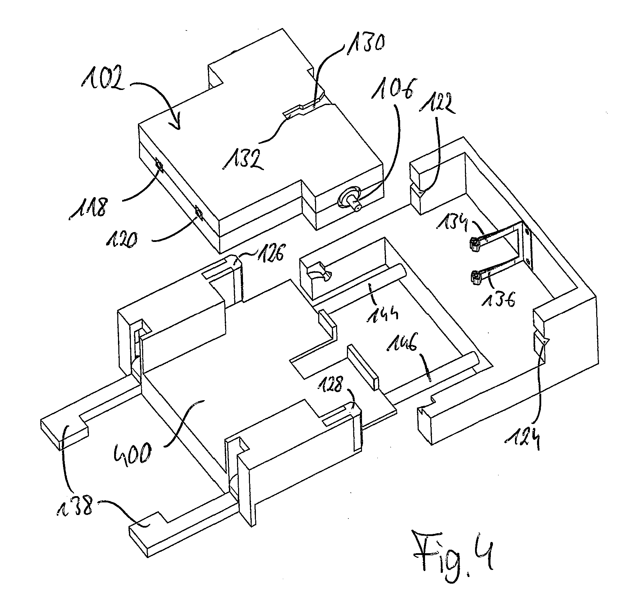

The detector device 100 comprises a receptacle 400 (better shown in Fig. 4) which is shaped and dimensioned for receiving the flow cell cartridge 102. Furthermore, the detector device 100 comprises a guiding mechanism adapted as a drawer mechanism for guiding the flow cell cartridge 102 when being received in the receptacle 400 into an alignment position (see Fig. 3) in which the light source interface 104 is aligned with an outlet aperture 110 of a light source 112, and the light detector interface 106 is aligned with an opening of a light detector which is not shown in Fig. 1 but which is located close to a light detector mount 114. The receptacle 400 is shaped and dimensioned or has a shape coding feature so that it is adapted for receiving the correspondingly shaped flow cell cartridge 102 exclusively in a specific orientation, as shown in Fig. 1. A user may manually insert the flow cell cartridge 102 into the receptacle 400, wherein the insertion and removal of the flow cell cartridge 102 into the receptacle 108 is simplified by the provision of a grip recess 116.

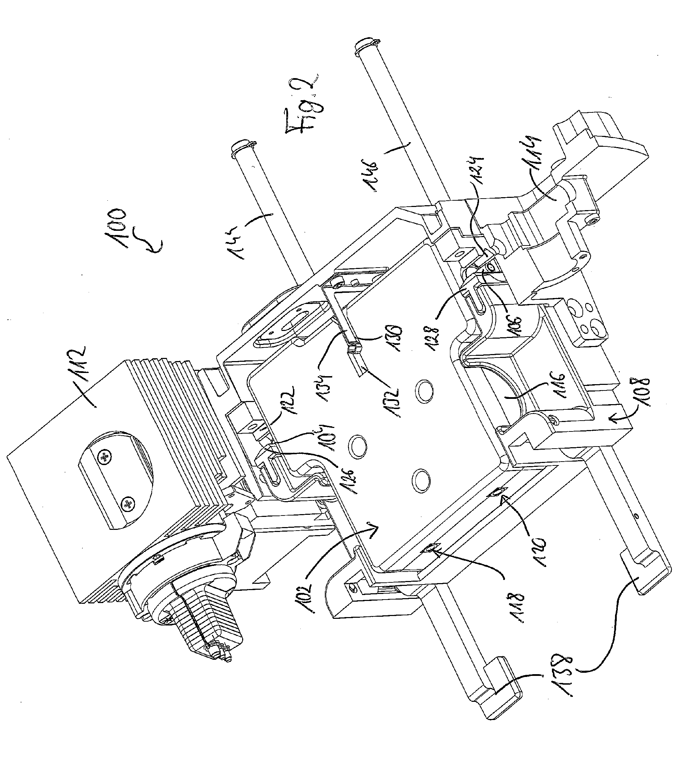

In the embodiment of Fig. 1, the guiding mechanism is a push loading drawer mechanism which is operable so that a user is enabled to bring the flow cell cartridge 102 received in the receptacle 400 into the alignment position shown in Fig. 3 by, starting with the insertion scenario shown in Fig. 1, pushing the push loading drawer mechanism along a direction 116 to convert the detector device 100 from the configuration shown in Fig. 1 via the configuration shown in Fig. 2 to the configuration shown in Fig. 3.

The flow cell cartridge 102 comprises a fluidic sample inlet interface 118 formed within the flow cell cartridge 102 and accessible via a lateral side surface of the receptacle 102. Furthermore, the flow cell cartridge 102 comprises a fluidic conduit (not shown in Fig. 1, but schematically indicated by reference numerals 140, 142, 143) adapted for conducting the fluidic sample from the fluidic sample inlet interface 118 along a path between the light source interface 104 and the light detector interface 106. Furthermore, the flow cell cartridge 102 comprises, formed within the flow cell cartridge 102 and accessible at the side face of the flow cell cartridge 102, a fluidic sample outlet interface 120 which is adapted for receiving the fluidic sample from the fluidic conduit and for draining the fluidic sample out of the flow cell cartridge 102.

Reference numeral 140 schematically illustrates a position of a quartz capillary arranged within the flow cell cartridge 102 so that the fluidic sample is pumped through this quartz capillary 140 in optical alignment between the optical light source 112 and the optical light detector (see reference numeral 114) when the detector module 100 is brought in the alignment position shown in Fig. 3. A sample may be inserted via the sample inlet interface 118 and may be removed via the sample outlet interface 120. At the fluid inlet 118 and at the fluid outlet 120, capillaries for fluidic samples or liquid samples may be fastened. When the detector module 100 is implemented within an HPLC, the fluid inlet interface 118 may be coupled with an outlet of a chromatographic separation column. The fluid outlet interface 120 may be in fluid communication with a waste container or a fractioner. Reference numeral 142 schematically illustrates a path along which the fluidic sample inserted via the fluidic inlet interface 118 travels towards the capillary 140. Reference numeral 143 schematically illustrates how a fluidic sample having passed the capillary 140 flows towards the fluid outlet interface 120.

As a part of the light source interface 104, the flow cell cartridge 102 comprises a first optical fiber. Furthermore, as a part of the light detector interface 106, the flow cell cartridge 102 comprises a second optical fiber. The optical fibers assigned to the interfaces 104, 106 are provided within a respective essentially hollow cylindrical ferrule, which can be seen for the light detector interface 106 in Fig. 1 particularly well. Within this ferrule, the respective optical fiber is embedded.

Moreover, the detector device 100 comprises a first V-shaped groove 122 which is adapted for engaging the first ferrule assigned to the optical source interface 104 when the flow cell cartridge 102 is in the alignment position shown in Fig. 3. A second V-shaped groove 124 of the detector device 100 is adapted for engaging the second ferrule assigned to the optical detector interface 106 when the flow cell cartridge 102 is in the alignment position shown in Fig. 3. A first rubber buffer 126 is arranged close to the optical source interface 104 and serves as a damping element for mechanically damping an abutment of the first groove 122 against the first ferrule assigned to the optical source interface 104. A second rubber buffer 128 is adapted as a damping element for mechanically damping an abutment of the second groove 124 against the second ferrule assigned to the optical detector interface 106 when the flow cell cartridge 102 is brought into the alignment position shown in Fig. 3. The provision of the rubber bumps 126, 128 which can additionally or alternatively comprise a metal spring, may prevent the light fiber connectors 104, 106 from damage. The V-shaped grooves 122, 124 serve for a radial positioning.

The flow cell cartridge 102 furthermore comprises an angled groove 130 formed in an upper main surface of the flow cell cartridge 102. Although not shown in Fig. 1, also a lower main surface of the flow cell cartridge 102 opposing the upper main surface of the flow cell cartridge 102 is provided with a correspondingly shaped angled groove. In a transition portion 132 of the angled groove 130, a first essentially linear portion of the groove 130 is connected to a second laterally shifted essentially linear portion of the groove 130, wherein the both linear portions are connected by a slanted intermediate portion. Correspondingly arranged to the pair of grooves 130, the detector device 100 comprises a first fork spring 134 and a second fork spring 136 which are adapted and located for engaging the pair of curved grooves 130 when the flow cell cartridge 102 is brought in the alignment position shown in Fig. 3. When sliding the flow cell cartridge 102 by actuating the push load drawer mechanism along the direction 116, the fork springs 134, 136 will first engage the grooves 130 and will subsequently be locked into the laterally displaced linear portion 132. The fork springs 134, 136 in cooperation with the grooves 130 provide for a locking mechanism.

When the detector device 100 has been brought in a configuration shown in Fig. 3, a lever 138 may be manually actuated for fixing the flow cell cartridge 102 in the alignment position. More precisely, pivoting the lever mechanism 138 upwardly fastens the detector device 100 using a fixing spring.

When the flow cell cartridge 102 is arranged between the optical light source 112 and the optical light detector (see reference numeral 114) in the alignment position of Fig. 3, a primary light beam generated by the light source 112 is directed towards the fluidic sample conducted to the flow cell cartridge 102. A secondary optical light beam generated after a fluorescence event in the sample, is then directed from the fluidic sample towards the light radiation detector (see reference numeral 114).

Between the optical light source 112 and the light source interface 104 as well as between the light detection interface 106 and the optical light detector (see reference numeral 114), a free jet configuration is achieved, i.e. no further optical member is arranged. The light will travel from the light source 112 through the light source interface 104 through the optical fiber associated therewith, through the fluidic conduit within the flow cell cartridge 102, through the optical fiber assigned to the optical detector interface 106, and from there into the optical detector (see reference numeral 114).

In order to use the detector module 100 for different kinds of analysis, the flow cell cartridge 102 is exchangeable or substitutable, so that volume and path length may be selected in a user-defined manner. With a short cell, a high throughput may be achieved. With a long cell, a high detection sensitivity may be achieved.

For inserting the cartridge 102 into the detector module 100, the flow cell cartridge 102 is first inserted in the receptacle 108 and is therefore fixed in the drawer mechanism. Then, the drawer mechanism may be actuated manually by a user by sliding it towards the direction 116. Fig. 1 shows two parallel arranged guiding rods 144, 146 as a part of the push loader drawer mechanism.

As can be taken from **Fig. 2**, during the sliding motion, the fork springs 134, 136 start engaging the grooves 130.

**Fig. 3** shows a scenario in which the sliding motion has been continued so that the fork springs 134, 136 are locked within the rearward portion 132 of the grooves 130 which provides for a locking. Then, the levers 138 being in a horizontal position in Fig. 1 and Fig. 2 are moved or pivoted so as to be brought in a vertical configuration as shown in Fig. 3. By taking this measure, a spring mechanism may be biased so that a fixation in the V-shaped grooves 122, 124 is enabled.

**Fig. 4** shows an image of the detector device 100 in which a part of the components are removed and in which the flow cell cartridge 102 is lifted with regard to the receptacle 400. As can be taken from Fig. 4, the dimensioning of the receptacle 104 corresponds to the dimensions of the flow cell cartridge 102 so that a correct insertion of the flow cell cartridge 102 into the receptacle 400 is only possible when a correspondingly correct orientation is achieved.

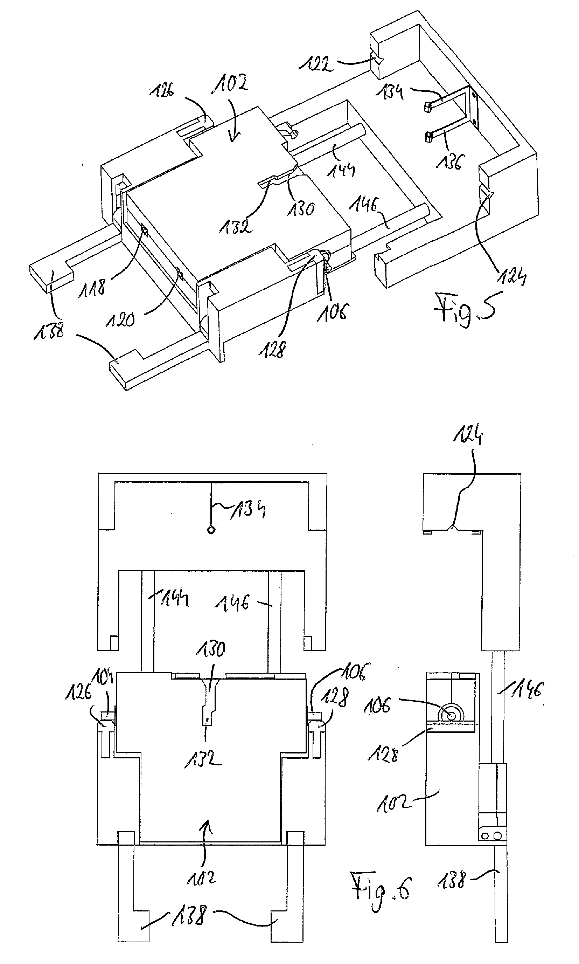

**Fig. 5** shows a scenario in which the flow cell cartridge 102 has been inserted successfully into the receptacle 400 due to the shape coding between the two components 102, 400.

**Fig. 6** shows a plan view and a side view of the arrangement of Fig. 5.

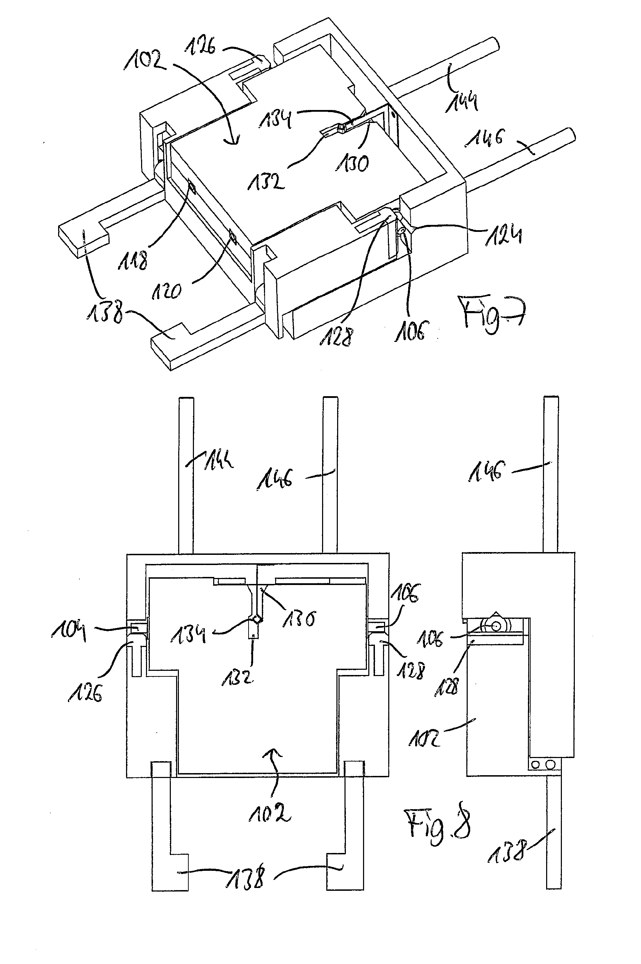

**Fig. 7** shows the arrangement of Fig. 5 in a scenario in which the spring forks 134, 136 partially engage or extend into the curved groove 130.

**Fig. 8** shows a corresponding plan view and side viewof the configuration of Fig. 7.

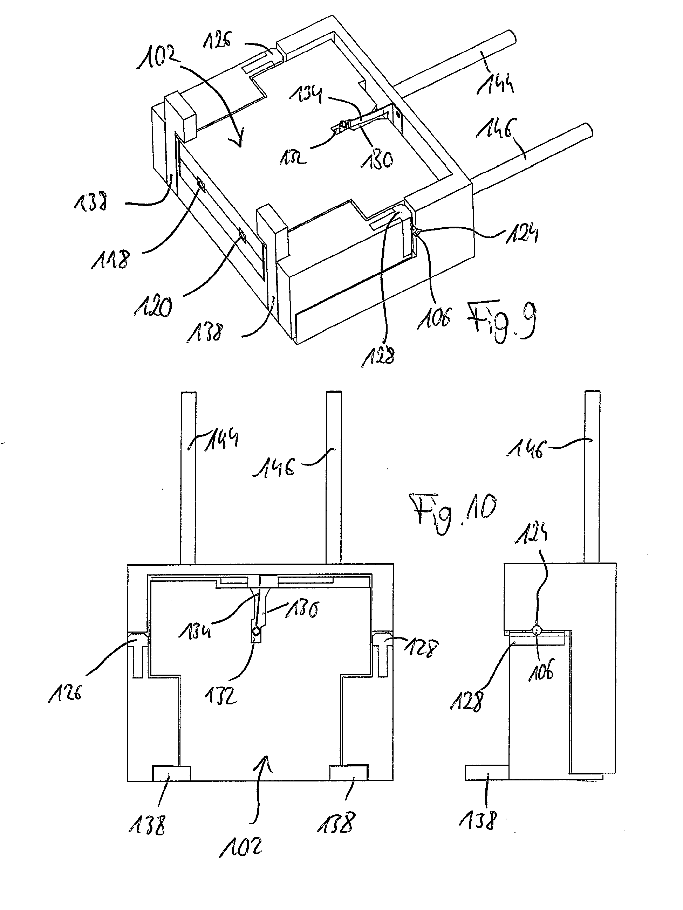

**Fig. 9** shows a scenario obtained when, starting from Fig. 7, the sliding motion in the direction 116 of Fig. 1 is further continued so that the fork springs 134, 136 lock into the corresponding curved grooves 130.

**Fig. 10** shows a corresponding plan view and side view related to the scenario of Fig. 9.

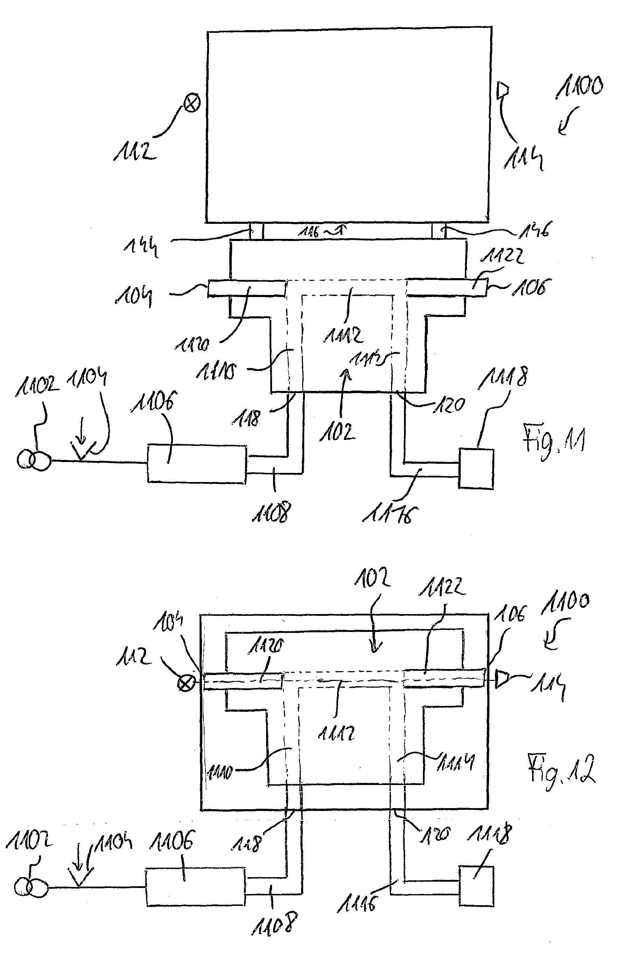

**Fig. 11** illustrations a high performance liquid chromatography device 1100 according to an exemplary embodiment.

The HPLC 1100 comprises a high pressure pump 1102. Via a needle and seat injector 1104, a sample may be inserted in the HPLC 1100. This sample may be separated in a chromatographic column 1106. Via an inlet capillary 1108, the fluidic sample which is already separated into fractions may be pumped through the fluid inlet port 118 into the flow cell cartridge 102 having an inner capillary 1110. Via the inner capillary 1110, the fluid is pumped to a quartz capillary 1112. After having passed the quartz capillary 1112, the sample is guided via a further capillary 1114 through the fluid outlet port 120 to a further capillary 1116 from where the sample may be guided in a waste container 1180 or into a fractioner.

A first fiber element 1120 is shown which is optically coupled to the light source interface 104. The light detector interface 106 is coupled to a second optical light fiber 1122.

When inserting the flow cell cartridge 102 into the system for detection, a sliding motion in a direction 116 is performed which is guided by the parallel aligned guiding rods 144, 146. While the liquid sample flows through the quartz capillary 1112, the optical detection may be performed, as will be explained referring to Fig. 12 in the following.

**Fig. 12** shows the HPLC 1100 in the alignment position.

In this position, light emitted by the light source 112 may propagate through the first light fiber 1120, from there through the quartz capillary 1112 where fluorescence events within the sample may occur. After that, the light may propagate through the outlet fiber 1122 and from there to the optical detector 114 where the fluorescence event is detected and evaluated.

It should be noted that the term "comprising" does not exclude other elements or features and the "a" or "an" does not exclude a plurality. Also elements described in association with different embodiments may be combined. It should also be noted that reference signs in the claims shall not be construed as limiting the scope of the claims.

## Claims

1. A detector device (100) for detecting a fluidic sample conducted through a flow cell cartridge (102) having an electromagnetic source interface (104) and an electromagnetic detector interface (106), the detector device (100) comprising
a receptacle (400) adapted for receiving the flow cell cartridge (102), and
a guiding mechanism adapted for guiding the flow cell cartridge (102) received in the receptacle (400) into an alignment position in which the electromagnetic source interface (104) is aligned with an electromagnetic radiation source (112) and the electromagnetic detector interface (106) is aligned with an electromagnetic radiation detector (114).

2. The detector device (100) according to claim 1, comprising at least one of:
the guiding mechanism is a drawer mechanism;
the guiding mechanism is a push loading drawer mechanism being operable so that a user is enabled to bring the flow cell cartridge (102) received in the receptacle (400) into the alignment position by pushing the push loading drawer mechanism along a predefined trajectory (116), particularly along a predefined linear trajectory (116) defined by at least one guiding rod (144, 146);
the guiding mechanism is a pivoting mechanism being operable so that a user is enabled to bring the flow cell cartridge (102) received in the receptacle (400) into the alignment position by pivoting the pivoting mechanism about a predefined axis;
the receptacle (400) comprises a shape coding feature adapted for receiving a correspondingly shaped flow cell cartridge (102) in a corresponding orientation;
the receptacle (400) is operable so that a user is enabled to manually insert the flow cell cartridge (102) into the receptacle (400);
the detector device (100) comprises the electromagnetic radiation source (112) and the electromagnetic radiation detector (114);
the detector device (100) comprises the electromagnetic radiation source (112) and the electromagnetic radiation detector (114), wherein the flow cell cartridge (102) is arranged between the electromagnetic radiation source (112) and the electromagnetic radiation detector (114) in the alignment position to direct a primary electromagnetic radiation beam generated by the electromagnetic radiation source (112) towards the fluidic sample conducted through the flow cell cartridge (102) and to direct a secondary electromagnetic radiation beam from the fluidic sample towards the electromagnetic radiation detector (114);
the detector device (100) comprises the electromagnetic radiation source (112) and the electromagnetic radiation detector (114), wherein the electromagnetic radiation source (112) and the electromagnetic radiation detector (114) are adapted for at least one of the group consisting of a transmission detection, an absorption detection, a fluorescence detection, and an optical detection of the fluidic sample conducted through the flow cell cartridge (102);
the detector device (100) is adapted for a free jet configuration;
the detector device (100) is adapted as a detector module;
the receptacle (400) is adapted for receiving the flow cell cartridge (102) in a defined reception position.

3. The detector device (100) according to claim 1 or any one of the above claims,
comprising the flow cell cartridge (102) adapted to be receivable by the receptacle (400), particularly comprising a set of a plurality of different flow cell cartridges (102) having different fluidic dimensions and each being adapted to be receivable by the receptacle (400).

4. The detector device (100) according to the preceding claim,
wherein the flow cell cartridge (102) comprises a fluidic sample inlet interface (118) adapted for receiving the fluidic sample, comprises a fluidic conduit (140, 142, 143) adapted for conducting the fluidic sample from the fluidic sample inlet interface (118) along a path (140) between the electromagnetic source interface (104) and the electromagnetic detector interface (106), and comprises a fluidic sample outlet interface (120) adapted for receiving the fluidic sample from the fluidic conduit (140, 142, 143) and for draining the fluidic sample out of the flow cell cartridge (102).

5. The detector device (100) according to claim 3 or any one of the above claims,
wherein the flow cell cartridge (102) comprises a first optical fiber as the electromagnetic source interface (104) and comprises a second optical fiber as the electromagnetic detector interface (106).

6. The detector device (100) according to the preceding claim,
wherein the flow cell cartridge (102) comprises a first ferrule in which the first optical fiber is embedded and comprises a second ferrule in which the second optical fiber is embedded.

7. The detector device (100) according to the preceding claim,
comprising a first groove (122), particularly a first V-shaped groove, adapted for engaging the first ferrule and comprising a second groove (124), particularly a second V-shaped groove, adapted for engaging the second ferrule when the flow cell cartridge (102) is in the alignment position.

8. The detector device (100) according to the preceding claim,
comprising a damping mechanism (126, 128), particularly a rubber buffer or a metal spring, adapted for mechanically damping an abutment of the first groove (122) against the first ferrule and of the second groove (124) against the second ferrule when the flow cell cartridge (102) is brought in the alignment position.

9. The detector device (100) according to claim 3 or any one of the above claims, comprising at least one of:
the flow cell cartridge (102) comprises a pair of curved grooves (130), particularly a pair of step-shaped grooves, arranged at opposing surface portions of the flow cell cartridge (102);
the detector device (100) comprises a pair of locking elements (134, 136), particularly a pair of fork spring elements, arranged for engaging the pair of curved grooves (130) when the flow cell cartridge (102) is in the alignment position;
a fixing mechanism being actuable for fixing the flow cell cartridge (102) in the alignment position, particularly a lever mechanism (138) actuable for fixing the flow cell cartridge (102) in the alignment position by tightening a fixing spring.

10. The detector device (100) according to claim 1 or any one of the above claims,
wherein the guiding mechanism is adapted for guiding the flow cell cartridge (102) into the alignment position triggered by one of the group consisting of a manual actuation of the guiding mechanism by a user, an automatic actuation of the guiding mechanism, an electric actuation of the guiding mechanism, a pneumatic actuation of the guiding mechanism, and a hydraulic actuation of the guiding mechanism.

11. A measurement device (1100) for measuring a fluidic sample, the measurement device (1100) comprising
a flow cell cartridge (102) for receiving the fluidic sample;
a detector device (100) of claim 1 or any one of the above claims in which the flow cell cartridge (102) is inserted for detecting the fluidic sample conducted through the flow cell cartridge (102).

12. The measurement device (1100) according to the preceding claim,
comprising a processing unit (1102) adapted for processing the fluidic sample, wherein the flow cell cartridge (102) is in fluid communication with the processing unit (1102) for receiving the processed fluidic sample.

13. The measurement device (1100) according to the preceding claim, comprising at least one of the following features:
the processing element (1102) is adapted for retaining the fluidic sample being a part of a mobile phase and for allowing other components of the mobile phase to pass the processing element (1102);
the processing element (1102) comprises a separation column;
the processing element (1102) comprises a chromatographic column for separating components of the fluidic sample;
at least a part of the processing element (1102) is filled with a fluid separating material;
at least a part of the processing element (1102) is filled with a fluid separating material, wherein the fluid separating material comprises beads having a size in the range of 1 µm to 50 µm;
at least a part of the processing element (1102) is filled with a fluid separating material, wherein the fluid separating material comprises beads having pores having a size in the range of 0.02 µm to 0.03 µm;
the flow cell cartridge (102) is arranged downstream of the processing unit (1102).

14. The measurement device (1100) according to claim 11 or any one of the above claims, comprising at least one of the following features:
the measurement device (1100) is adapted as a fluid separation system for separating compounds of the fluidic sample;
the measurement device (1100) is adapted to analyze at least one physical, chemical and/or biological parameter of at least one compound of the fluidic sample;
the measurement device (1100) comprises at least one of the group consisting of a sensor device, a test device for testing a device under test or a substance, a device for chemical, biological and/or pharmaceutical analysis, a capillary electrophoresis device, a liquid chromatography device, an HPLC device, a gas chromatography device, and a gel electrophoresis device;
the measurement device (1100) is adapted to conduct the fluidic sample with a high pressure;
the measurement device (1100) is adapted to conduct the fluidic sample with a pressure of at least 100 bar, particularly of at least 500 bar, more particularly of at least 1000 bar;
the measurement device (1100) is adapted to conduct a liquid sample;
the measurement device (1100) is adapted as a microfluidic device;
the measurement device (1100) is adapted as a nanofluidic device.

15. A method of detecting a fluidic sample conducted through a flow cell cartridge (102) having an electromagnetic source interface (104) and an electromagnetic detector interface (106), the method comprising
receiving the flow cell cartridge (102) in a receptacle (400) of a detector device (100);
guiding, by a guiding mechanism of the detector device (100), the flow cell cartridge (102) received in the receptacle (400) into an alignment position in which the electromagnetic source interface (104) is aligned with an electromagnetic radiation source (112) of the detector device (100) and the electromagnetic detector interface (106) is aligned with an electromagnetic radiation detector (114) of the detector device (100).
